# EUROPÄISCHE PATENTANMELDUNG

(11) **EP 3 722 912 A1**
(43) Veröffentlichungstag der Anmeldung: **14.10.2020**
(21) Anmeldenummer: 20166967.8
(22) Anmeldetag: 31.03.2020
(51) Int. Cl.: G05D 1/02, G08G 1/01

(54) **VERFAHREN ZUR KOLLISIONSVERMEIDUNG BEI EINEM FAHRERLOSEN TRANSPORTFAHRZEUG UND ENTSPRECHENDES FAHRERLOSES TRANSPORTFAHRZEUG**

(30) Priorität: 11.04.2019 DE 102019109555
(71) Anmelder: STILL GmbH, 22113 Hamburg (DE)
(72) Erfinder: TÖDTER, Joachim, 22391 Hamburg (DE)
(74) Vertreter: Patentship Patentanwaltsgesellschaft mbH

(57) **Zusammenfassung**

Die Erfindung betrifft ein Verfahren zum Betreiben eines fahrerlosen Transportfahrzeugs (1), bei dem die Umgebung des fahrerlosen Transportfahrzeugs (1) mittels mindestens eines Sensors (5, 6) erfasst wird und die Sensordaten mittels einer Datenverarbeitungseinrichtung (7) ausgewertet werden. Außerdem betrifft die Erfindung ein entsprechendes fahrerloses Transportfahrzeug (1). Es wird vorgeschlagen, dass die Sensordaten von beweglichen Objekten (3) in der Umgebung des fahrerlosen Transportfahrzeugs (1) daraufhin ausgewertet werden, ob sich ein Objekt (3) in einer vom Objekt (3) ausgehenden Annäherungsbewegung auf das fahrerlose Transportfahrzeug (1) zubewegt, und bei Erkennen einer Kollisionsgefahr eine kollisionsvermeidende Reaktionsfunktion fahrerlosen Transportfahrzeugs (1) eingeleitet wird.

## Beschreibung

Die Erfindung betrifft ein Verfahren zum Betreiben eines fahrerlosen Transportfahrzeugs, bei dem die Umgebung des fahrerlosen Transportfahrzeugs mittels mindestens eines Sensors erfasst wird und die Sensordaten mittels einer Datenverarbeitungseinrichtung ausgewertet werden.

Außerdem betrifft die Erfindung ein fahrerlosen Transportfahrzeugs mit einer Einrichtung zur Umgebungsüberwachung, die mindestens einen am fahrerlosen Transportfahrzeug angeordneten, für eine Erfassung der Umgebung des fahrerlosen Transportfahrzeugs ausgebildeten, Sensor und eine, für eine Auswertung der Sensordaten ausgebildete, Datenverarbeitungseinrichtung umfasst.

Zum Transportieren von Lasten werden bei logistischen Prozessen, z.B. beim Be- und Entladen von Lastkraftwagen oder beim Warentransport in Produktionsanlagen, in jüngster Zeit häufig fahrerlose Transportfahrzeuge verwendet. Unter fahrerlosen Transportfahrzeugen (FTF, englisch: Automated Guided Vehicle, AGV) versteht man flurgebundene Förderfahrzeuge mit eigenem Fahrantrieb, die automatisch gesteuert und berührungslos geführt werden. Die fahrerlosen Transportfahrzeuge werden mit den Lasten beladen oder nehmen die Lasten selbständig auf. Bei den Lasten handelt es sich meist um mit Waren beladene Paletten, fahrbare Gitterboxen Rollenuntersetzer, Boxen, Kisten, Umverpackungen. Dabei können die Waren lose oder in Transportbehältnissen, z.B. Boxen, auf den Paletten abgelegt sein. Auf dem fahrerlosen Transportfahrzeugen können auch Handhabungsgeräte montiert sein, beispielsweise Rollenbahnen, Roboterarme, Hubgerüste oder Greifer.

Beispiele für fahrerlose Transportfahrzeug sind so genannte autonome Unterfahrfahrzeuge. Dabei handelt es sich um automatisierte, flache Fahrzeuge mit einer Lastplattform. Die Lastplattform kann anhebbar und absenkbar sein, um eine Palette oder eine fahrbare Gitterbox unterfahren und anheben zu können. Alternativ kann die Lastplattform eine Rollenbahn als Lastfördermittel zum Verschieben der Last auf dem Fahrzeug aufweisen. Somit kann eine Palette beispielsweise von einer stationären Rollenbahn auf einer Seite des Fahrzeugs aufgenommen und an einer anderen stationären Rollenbahn von der gegenüberliegenden Seite des Fahrzeugs wieder abgesetzt werden.

Fahrerlose Transportfahrzeuge sind heute zur Vermeidung von Unfällen mit Sensoren ausgestattet, die, wie Lasersensoren, den Fahrbereich berührungslos abtasten oder, wie Schaltleisten, einen geringe Kraft aufbringen und im Fall einer drohenden Kollision das fahrerlose Transportfahrzeug stoppen. Die Sensoren sind in der Regel in einer Höhe von etwa 10-25 cm über dem Boden montiert, da insbesondere der Schutz von Personen im Vordergrund steht. Diese Personen haben üblicherweise Bodenkontakt und werden somit erkannt. Die Höhe der am fahrerlosen Transportfahrzeug angebrachten Sensoren ist weiterhin derart bemessen, dass eine liegende Person detektiert wird. Bei bekannten fahrerlosen Transportfahrzeugen werden aber nur Unfälle verhindert, die durch das fahrerlose Transportfahrzeug aktiv geschehen würden.

Die fahrerlosen Transportfahrzeuge sind also durch die oben genannten Sensoren derart gesteuert, dass sie selber keine Unfälle verursachen. Die fahrerlosen Transportfahrzeuge können aber von anderen Fahrzeugen, insbesondere Flurförderzeugen, beispielsweise Gabelstaplern, die gleichzeitig mit den fahrerlosen Transportfahrzeugen in einem logistischen System betrieben werden, angefahren werden. Dabei kommt oftmals auch die teure Sicherheitssensorik der fahrerlosen Transportfahrzeuge zu Schaden. Auch das Risiko für ein Anfahren durch Lastkraftwagen besteht. Insbesondere bei niedrigen fahrerlosen Transportfahrzeugen oder als Unterfahrfahrzeugen ausgebildeten fahrerlosen Transportfahrzeugen, die unter dem Namen "Turtles" (Schildkröten) bekannt sind, ist das Risiko hoch, weil die niedrigen fahrerlosen Transportfahrzeuge von den Fahrern der anderen Fahrzeuge, beispielsweise von Fahrern eines Flurförderzeugs, nicht wahrgenommen werden.

Der vorliegenden Erfindung liegt die Aufgabe zugrunde, ein Verfahren sowie ein fahrerloses Transportfahrzeug der eingangs genannten Art so auszugestalten, dass das Risiko eines Anfahrens durch andere Fahrzeuge verringert wird.

Diese Aufgabe wird erfindungsgemäß verfahrensseitig dadurch gelöst, dass die Sensordaten von beweglichen (mobilen) Objekten in der Umgebung des fahrerlosen Transportfahrzeugs daraufhin ausgewertet werden, ob sich ein bewegliches (mobiles) Objekt in einer vom Objekt ausgehenden Annäherungsbewegung auf das fahrerlose Transportfahrzeug zubewegt, und bei Erkennen einer Kollisionsgefahr eine kollisionsvermeidende Reaktionsfunktion des fahrerlosen Transportfahrzeugs eingeleitet wird.

Dabei liegt der Erfindung die Erkenntnis zu Grunde, dass die üblicherweise bei fahrerlosen Transportfahrzeugen bereits vorgesehene Umgebungsüberwachung mittels Sensoren, insbesondere Laserscannern, genutzt werden kann, um auch das Risiko einer Kollision mit beweglichen (mobilen) Objekten in der Umgebung, beispielsweise mit anderen Fahrzeugen, die sich aktiv auf das fahrerlosen Transportfahrzeug zubewegen, zu verringern. Wird aufgrund der Auswertung der Sensordaten der Sensoren erkannt, dass ein solches mobiles Objekt auf das fahrerlosen Transportfahrzeug zufährt und sich ein bewegendes, mobiles Objekt auf Kollisionskurs zum fahrerlosen Transportfahrzeug befindet, wird automatisch eine Reaktionsfunktion des fahrerlosen Transportfahrzeugs eingeleitet, um eine Kollision zu verhindern.

In einer bevorzugten Ausgestaltung der Erfindung wird als Reaktionsfunktion, insbesondere in einem ersten Schritt, eine optische und/oder akustische Warnmeldung ausgegeben. Auf diese Weise kann ein Fahrer eines anderen Fahrzeugs, der beispielsweise das fahrerlosen Transportfahrzeug aufgrund seiner niedrigen Bauart übersehen hat und auf das fahrerlosen Transportfahrzeug zufährt, gewarnt werden.

Zusätzlich oder alternativ zur Warnmeldung kann vorteilhafterweise als Reaktionsfunktion auch ein Anhalten des fahrerlosen Transportfahrzeugs bewirkt werden.

Eine weitere bevorzugte Ausgestaltung besteht darin, dass als Reaktionsfunktion ein Ausweichen des fahrerlosen Transportfahrzeugs bewirkt wird. Diese Funktion kann insbesondere in einem zweiten Schritt zur Anwendung kommen, wenn mit der Warnmeldung und gegebenenfalls auch mit einem Stoppen des fahrerlosen Transportfahrzeugs eine Kollision mit dem sich auf das fahrerlose Transportfahrzeug zubewegenden Objekt nicht zu vermeiden ist. In diesem Fall kann das fahrerlose Transportfahrzeug aktiv dem zubewegenden Objekt ausweichen, indem es beispielsweise auf dem Anfahrtsweg wieder zurückfährt oder zur Seite fährt.

Dabei wird vorzugsweise mittels des Sensors beziehungsweise der Sensoren geprüft, ob der Ausweichweg frei von Hindernissen ist. Der Zeitraum zwischen dem ersten Schritt, also der Ausgabe der Warnmeldung und/oder dem Anhalten des fahrerlosen Transportfahrzeugs, und dem zweiten Schritt, also dem Einleiten des Ausweichvorgangs, kann für eine Berechnung des Pfades für das Ausweichen und die Absicherung der Hindernisfreiheit des Ausweichweges genutzt werden.

Gemäß einer Weiterbildung der Erfindung werden Ort und Zeitpunkt der Annäherungsbewegung des Objekts und/oder einer vorausberechneten, möglichen Kollision des mobilen Objekts mit dem fahrerlosen Transportfahrzeugs als Gefahrenschwerpunkt in einer Datenspeichereinrichtung gespeichert. Somit ist eine Auswertung über mögliche Gefahrenschwerpunkte innerhalb eines logistischen Systems möglich.

Vorteilhafterweise werden gemäß einer Weiterbildung der Erfindung die Daten des Gefahrenschwerpunkts an ein zentrales Leitsystem übermittelt, in dem der Gefahrenschwerpunkt angezeigt wird. Somit können sich alle Betriebspersonen, die sich in einem logistischen System, beispielsweise in einer Lagerhalle oder einer Produktionshalle bewegen, schnell und unkompliziert über Gefahrenschwerpunkte informieren.

Vorteilhafterweise werden gemäß einer Weiterbildung der Erfindung die aktuellen Positionsdaten des fahrerlosen Transportfahrzeugs an ein zentrales Leitsystem übermittelt, von dem eine Verkehrsregelung durchgeführt wird. Sofern das fahrerlose Transportfahrzeug eine Ausweichbewegung ausführt, um eine Kollision mit dem mobilen Objekt zu vermeiden, kann die neue Position des fahrerlosen Transportfahrzeugs hierdurch an das Leitsystem gemeldet werden, das für die Verkehrsregelung zuständig ist, so dass die Verkehrsregelung diese neue Situation berücksichtigten und dieser neuen Situation Rechnung tragen kann.

Die Erfindung betrifft weiterhin ein fahrerloses Transportfahrzeug mit einer Einrichtung zur Umgebungsüberwachung, die mindestens einen am fahrerlosen Transportfahrzeug angeordneten, für eine Erfassung der Umgebung des fahrerlosen Transportfahrzeugs ausgebildeten, Sensor und eine, für eine Auswertung der Sensordaten ausgebildete, Datenverarbeitungseinrichtung umfasst.

Bei einem solchen fahrerlosen Transportfahrzeug wird die gestellte Aufgabe dadurch gelöst, dass die Datenverarbeitungseinrichtung dazu eingerichtet ist, eine aktive Annäherungsbewegung eines vom Sensor erfassten, beweglichen (mobilen) Objekts auf Kollisionskurs zum fahrerlosen Transportfahrzeug zu erkennen und darauf eine kollisionsvermeidende Reaktionsfunktion des fahrerlosen Transportfahrzeugs einzuleiten.

Vorzugsweise steht die Datenverarbeitungseinrichtung mit einer Warneinrichtung des fahrerlosen Transportfahrzeugs in Wirkverbindung, die dazu eingerichtet ist, als Reaktionsfunktion eine Warnmeldung auszugeben. Mit dieser Warnmeldung können beispielsweise Fahrer von herkömmlichen Flurförderzeugen, beispielsweise Fahrer von Gabelstaplern, die auf das fahrerlose Transportfahrzeug zufahren, vor der Gefahr einer Kollision mit dem fahrerlosen Transportfahrzeug gewarnt werden.

Dabei kann die Warneinrichtung zweckmäßigerweise als optische Signalvorrichtung, insbesondere als Blinklichteinrichtung oder Rundumkennleuchte, ausgebildet sein.

Zusätzlich oder alternativ kann die Warneinrichtung auch als akustische Signalvorrichtung, insbesondere als Huptoneinrichtung oder Sirenentoneinrichtung, ausgebildet sein.

Gemäß einer besonders bevorzugten Ausgestaltung steht die Datenverarbeitungseinrichtung mit einer Steuerungseinrichtung des fahrerlosen Transportfahrzeugs in Wirkverbindung oder ist in eine Steuerungseinrichtung des fahrerlosen Transportfahrzeugs integriert, die dazu eingerichtet ist, als Reaktionsfunktion ein Anhalten des fahrerlosen Transportfahrzeugs zu bewirken.

Um eine mögliche Kollision auch dann zu verhindern, wenn weder die Ausgabe von Warnmeldungen, als auch das Anhalten des fahrerlosen Transportfahrzeugs hierfür ausreichen, ist in einer weiteren vorteilhaften Ausgestaltung vorgesehen, dass die Datenverarbeitungseinrichtung mit einer Steuerungseinrichtung des fahrerlosen Transportfahrzeugs in Wirkverbindung steht oder in eine Steuerungseinrichtung des fahrerlosen Transportfahrzeugs integriert ist, die dazu eingerichtet ist, als Reaktionsfunktion ein Ausweichen des fahrerlosen Transportfahrzeugs zu bewirken.

Dabei ist es sinnvoll, zu prüfen, ob der Ausweichweg auch frei von Hindernissen ist. Daher ist die Datenverarbeitungseinrichtung vorzugsweise dazu eingerichtet, aus den Sensordaten der Umgebungsüberwachung einen hindernisfreien Ausweichweg zu bestimmen.

Als Sensor für die Erfassung einer Annäherung eines beweglichen Objekts kommt insbesondere ein Laserscanner in Frage.

Der Sensor kann alternativ auch als Radarsensor ausgebildet sein.

Auch ein Ultraschallsensor kommt als Sensor in Betracht.

Besonders vorteilhaft ist auch eine Ausbildung des Sensors als Kamera.

Alternativ können das fahrerlose Transportfahrzeug und das mobile Objekt mit jeweils einem Sensor ihre jeweilige Position erfassen und das fahrerlose Transportfahrzeug und das mobile Objekt ihre Positionsdaten austauschen, insbesondere über eine Funkverbindung. Hierdurch kann ebenfalls eine Annäherung des mobilen Objekts auf das fahrerlose Transportfahrzeug hin ermittelt werden.

Zweckmäßigerweise ist die Datenverarbeitungseinrichtung in eine Fahrzeugsteuerungseinrichtung oder in eine Sicherheitssteuerungseinrichtung oder in eine Automatisierungssteuerungseinrichtung oder in eine mindestens zwei dieser Einrichtungen umfassende Kombinationssteuerungseinrichtung des fahrerlosen Transportfahrzeugs integriert.

Um mögliche Gefahrenschwerpunkte innerhalb eines logistischen Systems auswerten zu können, ist gemäß einer Weiterbildung der Erfindung vorgesehen, dass die Datenverarbeitungseinrichtung über eine integrierte Datenspeichereinrichtung verfügt oder mit einer Datenspeichereinrichtung in Wirkverbindung steht, die dazu eingerichtet ist, Ort und Zeitpunkt der Annäherungsbewegung des Objekts und/oder einer in der Datenverarbeitungseinrichtung vorausberechneten, möglichen Kollision des Objekts mit dem fahrerlosen Transportfahrzeug als Gefahrenschwerpunkt zu speichern.

Dabei steht die Datenspeichereinrichtung zweckmäßigerweise mit einem zentralen Leitsystem in Wirkverbindung, das über eine Anzeigevorrichtung verfügt, welche für eine Anzeige des Gefahrenschwerpunkts ausgebildet ist. Somit können Betriebspersonen auf einfache und schnelle Weise auf mögliche Gefahrenschwerpunkte hingewiesen werden.

Vorteilhafterweise steht gemäß einer Weiterbildung der Erfindung das fahrerlose Transportfahrzeug mit einem zentralen Leitsystem in Verbindung, von dem eine Verkehrsregelung durchgeführt wird. Sofern das fahrerlose Transportfahrzeug eine Ausweichbewegung ausführt, um eine Kollision mit dem mobilen Objekt zu vermeiden, kann die neue Position des fahrerlosen Transportfahrzeugs hierdurch an das Leitsystem gemeldet werden, das für die Verkehrsregelung zuständig ist, so dass die Verkehrsregelung diese neue Situation berücksichtigten und dieser neuen Situation Rechnung tragen kann.

Mit der Erfindung werden viele Vorteile gleichzeitig erreicht:
Es können Beschädigungen an den fahrerlosen Transportfahrzeugen durch Kollisionen mit anderen Fahrzeugen vermieden werden. Außerdem können etwaige Reparaturkosten an fahrerlosen Transportfahrzeugen verringert werden. Auch die Zahl unfallbedingter Ausfälle von fahrerlosen Transportfahrzeugen kann reduziert werden. Schließlich wird insgesamt die Zufriedenheit der Kunden mit den fahrerlosen Transportfahrzeugen erhöht.

Weitere Vorteile und Einzelheiten der Erfindung werden anhand des in der schematischen Figur dargestellten Ausführungsbeispiels näher erläutert. Hierbei zeigt die
- Figur: ein fahrerloses Transportfahrzeug und ein bewegliches (mobiles) Objekt.

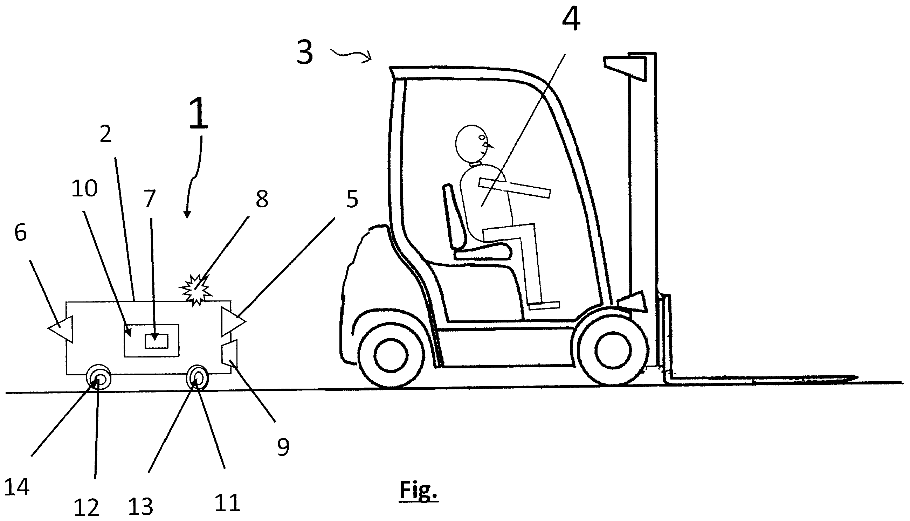

Das fahrerlose Transportfahrzeug 1 weist im dargestellten Ausführungsbeispiel eine niedrige, flache Bauart mit einer Lastplattform 2 auf, auf der eine in der Figur nicht dargestellte Last transportiert werden kann. Solche fahrerlosen Transportfahrzeuge 1 werden wegen ihrer Form auch als "Turtles" (Schildkröten) oder Unterfahrfahrzeuge bezeichnet. Sie kommen beispielsweise in Lagerhallen oder Produktionshallen zum automatischen Transport von Waren zum Einsatz.

Zum autonomen Fahren verfügt das fahrerlose Transportfahrzeug 1 über angetriebene Räder 11, 12, die mittels Elektromotoren 13, 14 angetrieben werden. Die Elektromotoren 13, 14 können in einer oder mehrerer Antriebsachsen der Räder 11, 12 integriert sein. Die Elektromotoren 13, 14 werden von einer Fahrzeugsteuerung 10 gesteuert. Das fahrerlose Transportfahrzeug 1 kann durch Differenzdrehzahlen an den angetriebene Rädern 11, 12 einer Antriebsachse gelenkt werden. Alternativ wäre aber auch eine Lenkung des fahrerlosen Transportfahrzeugs 1 mittels elektromotorischer Verstellung eines oder mehrerer gelenkter Räder möglich.

Üblicherweise werden in der Arbeitsumgebung des fahrerlosen Transportfahrzeugs 1 auch nicht automatisierte Flurförderzeuge betrieben. Exemplarisch ist in der Figur ein Flurförderzeug 3, beispielsweise ein Gabelstapler, gezeigt, der von einem Fahrer 4 gesteuert wird. Aufgrund der flachen, niedrigen Bauweise des fahrerlosen Transportfahrzeugs 1 kann das fahrerlose Transportfahrzeug 1 vom Fahrer 4 des Flurförderzeugs 3 leicht übersehen werden. Fährt das Flurförderzeug 3 direkt auf das fahrerlose Transportfahrzeug 1 zu, so kann es zu einer Kollision kommen, die zu hohen Schäden beim fahrerlosen Transportfahrzeug 1 führen kann.

Um solche Kollisionen zu vermeiden, weist das fahrerlosen Transportfahrzeug 1 Sensoren 5, 6 auf, mit denen die Umgebung des fahrerlosen Transportfahrzeugs 1 überwacht wird. Als Sensoren 5, 6 werden im vorliegenden Ausführungsbeispiel Laserscanner oder Ultraschallsensoren oder Radarsensoren oder Kameras oder ein Positionsdatenaustausch der Positionen des fahrerlosen Transportfahrzeugs 1 und des mobilen Objekts 3 per Funk verwendet. Die Sensordaten der Sensoren 5, 6 werden an eine Datenverarbeitungseinrichtung 7 übertragen.

Die Datenverarbeitungseinrichtung 7 ist so programmiert, dass nicht nur passive bzw. stationäre Hindernisse im Fahrweg des fahrerlosen Transportfahrzeugs 1 erkannt werden, sondern auch aktive Annäherungsbewegungen von beweglichen (mobilen) Objekten 3, im dargestellten Ausführungsbeispiel des Flurförderzeugs 3, in der Umgebung des fahrerlosen Transportfahrzeugs 1 erkannt werden. Hierzu ist die Datenverarbeitungseinrichtung 7 mit einer Bewegungserkennung ausgestattet, die Bewegungen von mobilen Objekten 3 erfassen und Bewegungsrichtungen und Bewegungsgeschwindigkeiten des mobilen Objekts 3 berechnen und vorausberechnen kann. Auf diese Weise kann also von dem fahrerlosen Transportfahrzeug 1 mittels der Sensoren 5, 6 eine vom Flurförderzeug 3 verursachte Annäherungsbewegung auf das fahrerlose Transportfahrzeug 1 erkannt werden und somit erkannt werden, wenn das bewegliche (mobile) Objekt 3 auf das fahrerlosen Transportfahrzeug 1 zufährt.

Wird bei der Auswertung der Sensordaten in der Datenverarbeitungseinrichtung 7 beispielsweise erkannt, dass das fahrende Flurförderzeug 3 auf Kollisionskurs auf das fahrerlose Transportfahrzeug 1 zufährt, so leitet die Datenverarbeitungseinrichtung 7 eine Reaktionsfunktion des fahrerlosen Transportfahrzeugs 1 ein, um die Kollision zu verhindern.

Dabei wird in einem ersten Schritt eine optische Warnmeldung ausgegeben. Hierzu wird eine optische Warneinrichtung, beispielsweise eine Rundumkennleuchte 8, aktiviert, die ein Warnlicht ausstrahlt. Alternativ oder zusätzlich kann eine akustische Warnmeldung ausgegeben werden, indem ein Hupton über einen Lautsprecher 9 abgegeben wird. Der Fahrer 4 des Flurförderzeugs 3 wird dadurch auf die Kollisionsgefahr aufmerksam gemacht, so dass er von sich aus das Flurförderzeug 3 anhalten oder ein Ausweichmanöver einleiten kann.

Alternativ oder zusätzlich wird das fahrerlosen Transportfahrzeug 1 durch einen von der Datenverarbeitungseinrichtung 7 veranlassten Steuerungsbefehl angehalten. Hierzu greift die Datenverarbeitungseinrichtung 7 in die Fahrzeugsteuerung 10 des fahrerlosen Transportfahrzeugs 1 ein, die den Fahrantrieb des fahrerlosen Transportfahrzeug 1 ansteuert. Zum Zwecke kurzer Reaktionszeiten und kompakter Bauweise kann die Datenverarbeitungseinrichtung 7 in die Fahrzeugsteuerung 10 integriert sein. Die Fahrzeugsteuerung 10 stoppt den Fahrantrieb des fahrerlosen Transportfahrzeugs 1, indem die Elektromotoren 13, 14 an den angetriebenen Rädern 11, 12 gestoppt werden.

Wenn eine Kollision des fahrenden Objekts 3 mit dem fahrerlosen Transportfahrzeug 1 auch durch Anhalten des fahrerlosen Transportfahrzeugs 1 nicht zu vermeiden ist, leitet die Datenverarbeitungseinrichtung 7 in einem zweiten Schritt eine Reaktionsfunktion ein, bei der das fahrerlosen Transportfahrzeug 1 dem auf das fahrerlose Transportfahrzeug 1 in einem Kollisionskurs zufahrenden Flurförderzeug 3 ausweicht. Hierzu werden Fahrbefehle und/oder Lenkbefehle von der Fahrzeugsteuerung 10 an die Elektromotoren 13, 14 und/oder an die gelenkten Räder gegeben, so dass das fahrerlose Transportfahrzeug 1 aktiv in einer Ausweichbewegung dem anfahrenden mobilen Objekt 3 ausweicht.

Der Zeitraum zwischen dem ersten Schritt, in dem eine Warnmeldung ausgeben wird, und dem zweiten Schritt, in dem eine Ausweichbeweung des fahrerlosen Transportfahrzeugs durchgeführt wird, wird für die Berechnung des Ausweichwegs und die Absicherung der Hindernisfreiheit des Ausweichwegs genutzt. Dabei stellen die Sensoren 5, 6 die Überwachung des Ausweichwegs sicher.

## Patentansprüche

1. Verfahren zum Betreiben eines fahrerlosen Transportfahrzeugs (1), bei dem die Umgebung des fahrerlosen Transportfahrzeugs (1) mittels mindestens eines Sensors (5; 6) erfasst wird und die Sensordaten des mindestens einen Sensors (5; 6) mittels einer Datenverarbeitungseinrichtung (7) ausgewertet werden, **dadurch gekennzeichnet, dass** die Sensordaten von beweglichen Objekten (3) in der Umgebung des fahrerlosen Transportfahrzeugs (1) daraufhin ausgewertet werden, ob sich ein Objekt (3) in einer vom Objekt (3) ausgehenden Annäherungsbewegung auf das fahrerlose Transportfahrzeug (1) zubewegt, und bei Erkennen einer Kollisionsgefahr eine kollisionsvermeidende Reaktionsfunktion des fahrerlosen Transportfahrzeugs (1) eingeleitet wird.

2. Verfahren nach Anspruch 1, **dadurch gekennzeichnet, dass** als Reaktionsfunktion eine optische und/oder akustische Warnmeldung ausgegeben wird.

3. Verfahren nach Anspruch 1 oder 2, **dadurch gekennzeichnet, dass** als Reaktionsfunktion ein Anhalten des fahrerlosen Transportfahrzeugs (1) bewirkt wird.

4. Verfahren nach einem der Ansprüche 1 bis 3, **dadurch gekennzeichnet, dass** als Reaktionsfunktion ein Ausweichen des fahrerlosen Transportfahrzeugs (1) bewirkt wird.

5. Verfahren nach einem der Ansprüche 1 bis 4, **dadurch gekennzeichnet, dass** Ort und Zeitpunkt der Annäherungsbewegung des Objekts (3) und/oder einer vorausberechneten, möglichen Kollision des Objekts (3) mit dem fahrerlosen Transportfahrzeug (1) als Gefahrenschwerpunkt in einer Datenspeichereinrichtung gespeichert werden.

6. Verfahren nach Anspruch 5, **dadurch gekennzeichnet, dass** die Daten des Gefahrenschwerpunkts an ein zentrales Leitsystem übermittelt werden, in dem der Gefahrenschwerpunkt angezeigt wird.

7. Verfahren nach einem der Ansprüche 1 bis 6, **dadurch gekennzeichnet, dass** die aktuellen Positionsdaten des fahrerlosen Transportfahrzeugs (1) an ein zentrales Leitsystem übermittelt werden, von dem eine Verkehrsregelung durchgeführt wird.

8. Verfahren nach einem der Ansprüche 1 bis 7, **dadurch gekennzeichnet, dass** das fahrerlose Transportfahrzeug (1) und das mobile Objekt (3) mit jeweils einem Sensor ihre jeweilige Position erfassen und das fahrerlose Transportfahrzeug (1) und das mobile Objekt (3) ihre Positionsdaten austauschen, insbesondere über eine Funkverbindung.

9. Fahrerloses Transportfahrzeug (1) mit einer Einrichtung zur Umgebungsüberwachung, die mindestens einen am fahrerlosen Transportfahrzeug (1) angeordneten, für eine Erfassung der Umgebung des fahrerlosen Transportfahrzeugs (1) ausgebildeten, Sensor (5; 6) und eine, für eine Auswertung der Sensordaten ausgebildete, Datenverarbeitungseinrichtung (7) umfasst, **dadurch gekennzeichnet, dass** die Datenverarbeitungseinrichtung (7) dazu eingerichtet ist, eine aktive Annäherungsbewegung eines vom Sensor (5, 6) erfassten, beweglichen Objekts (3) auf Kollisionskurs zum fahrerlosen Transportfahrzeug (1) zu erkennen und daraufhin eine kollisionsvermeidende Reaktionsfunktion des fahrerlosen Transportfahrzeugs (1) einzuleiten.

10. Fahrerloses Transportfahrzeug nach Anspruch 9, **dadurch gekennzeichnet, dass** die Datenverarbeitungseinrichtung (7) mit einer Warneinrichtung des fahrerlosen Transportfahrzeugs (1) in Wirkverbindung steht, die dazu eingerichtet ist, als Reaktionsfunktion eine Warnmeldung auszugeben.

11. Fahrerloses Transportfahrzeug nach Anspruch 10, **dadurch gekennzeichnet, dass** die Warneinrichtung als optische Signalvorrichtung, insbesondere als Blinklichteinrichtung oder Rundumkennleuchte (8), ausgebildet ist.

12. Fahrerloses Transportfahrzeug nach Anspruch 9 oder 10, **dadurch gekennzeichnet, dass** die Warneinrichtung als akustische Signalvorrichtung, insbesondere als Huptoneinrichtung oder Sirenentoneinrichtung, ausgebildet ist.

13. Fahrerloses Transportfahrzeug nach einem der Ansprüche 9 bis 12, **dadurch gekennzeichnet, dass** die Datenverarbeitungseinrichtung (7) mit einer Steuerungseinrichtung des fahrerlosen Transportfahrzeugs in Wirkverbindung steht oder in eine Steuerungseinrichtung des fahrerlosen Transportfahrzeugs (1) integriert ist, die dazu eingerichtet ist, als Reaktionsfunktion ein Anhalten des fahrerlosen Transportfahrzeugs (1) zu bewirken.

14. Fahrerloses Transportfahrzeug nach einem der Ansprüche 9 bis 13, **dadurch gekennzeichnet, dass** die Datenverarbeitungseinrichtung (7) mit einer Steuerungseinrichtung des fahrerlosen Transportfahrzeugs (1) in Wirkverbindung steht oder in eine Steuerungseinrichtung des fahrerlosen Transportfahrzeugs (1) integriert ist, die dazu eingerichtet ist, als Reaktionsfunktion ein Ausweichen des fahrerlosen Transportfahrzeugs (1) zu bewirken.

15. Fahrerloses Transportfahrzeug nach Anspruch 14, **dadurch gekennzeichnet, dass** die Datenverarbeitungseinrichtung (7) dazu eingerichtet ist, aus den Sensordaten der Umgebungsüberwachung einen hindernisfreien Ausweichweg zu bestimmen.

16. Fahrerloses Transportfahrzeug nach einem der Ansprüche 9 bis 15, **dadurch gekennzeichnet, dass** der Sensor (5, 6) als Laserscanner ausgebildet ist.

17. Fahrerloses Transportfahrzeug nach einem der Ansprüche 9 bis 15, **dadurch gekennzeichnet, dass** der Sensor (5, 6) als Radarsensor ausgebildet ist.

18. Fahrerloses Transportfahrzeug nach einem der Ansprüche 9 bis 15, **dadurch gekennzeichnet, dass** der Sensor (5, 6) als Ultraschallsensor ausgebildet ist.

19. Fahrerloses Transportfahrzeug nach einem der Ansprüche 9 bis 15, **dadurch gekennzeichnet, dass** der Sensor (5, 6) als Kamera ausgebildet ist.

20. Fahrerloses Transportfahrzeug nach einem der Ansprüche 9 bis 19, **dadurch gekennzeichnet, dass** das fahrerlose Transportfahrzeug (1) und das mobile Objekt (3) mit jeweils einem Sensor ihre jeweilige Position erfassen und das fahrerlose Transportfahrzeug (1) und das mobile Objekt (3) ihre Positionsdaten austauschen, insbesondere über eine Funkverbindung.

21. Fahrerloses Transportfahrzeug nach einem der Ansprüche 9 bis 20, **dadurch gekennzeichnet, dass** die Datenverarbeitungseinrichtung (7) in eine Fahrzeugsteuerungseinrichtung (10) oder in eine Sicherheitssteuerungseinrichtung oder in eine Automatisierungssteuerungseinrichtung oder in eine mindestens zwei dieser Einrichtungen umfassende Kombinationssteuerungseinrichtung des fahrerlosen Transportfahrzeugs (1) integriert ist.

22. Fahrerloses Transportfahrzeug nach einem der Ansprüche 9 bis 21, **dadurch gekennzeichnet, dass** die Datenverarbeitungseinrichtung (7) über eine integrierte Datenspeichereinrichtung verfügt oder mit einer Datenspeichereinrichtung in Wirkverbindung steht, die dazu eingerichtet ist, Ort und Zeitpunkt der Annäherungsbewegung des Objekts (3) und/oder einer in der Datenverarbeitungseinrichtung (7) vorausberechneten, möglichen Kollision des Objekts (3) mit dem fahrerlosen Transportfahrzeug (1) als Gefahrenschwerpunkt zu speichern.

23. Fahrerloses Transportfahrzeug nach Anspruch 22, **dadurch gekennzeichnet, dass** die Datenspeichereinrichtung (7) mit einem zentralen Leitsystem in Wirkverbindung steht, das über eine Anzeigevorrichtung verfügt, welche für eine Anzeige des Gefahrenschwerpunkts ausgebildet ist.

24. Fahrerloses Transportfahrzeug nach einem der Ansprüche 9 bis 23, **dadurch gekennzeichnet, dass** das fahrerloses Transportfahrzeug (1) mit einem zentralen Leitsystem in Wirkverbindung steht, das eine Verkehrsregelung durchführt.
